# DEMANDE DE BREVET EUROPEEN

(11) **EP 1 724 910 A2**
(43) Date de publication de la demande: **22.11.2006**
(21) Numéro de dépôt: 06114125.5
(22) Date de dépôt: 17.05.2006
(51) Int. Cl.: H02M 3/158

(54) **Alimentation de charges de puissances différentes par un convertisseur continu-continu**

(30) Priorité: 18.05.2005 FR 0551287
(71) Demandeur: ST MICROELECTRONICS S.A., 92120 Montrouge (FR)
(72) Inventeur: Heurtier, Jérôme, 37000, Tours (FR); Florence, Arnaud, 37360, Saint Antoine du Rocher (FR)
(74) Mandataire: de Beaumont, Michel

(57) **Abrégé**

L'invention concerne un convertisseur de puissance de type alimentation à découpage de fourniture d'une tension à plusieurs charges (10, 20), une première charge étant de puissance relativement faible par rapport à une deuxième charge et le convertisseur comportant un circuit de génération d'impulsions de découpage d'une tension continue (Vdc). Le convertisseur comporte des moyens (55) pour sélectionner un mode de fonctionnement parmi :
un premier mode de fonctionnement dans lequel seule la charge de puissance relativement faible est alimentée et le circuit de génération d'impulsions de découpage régule la tension fournie à cette charge ; et
un deuxième mode de fonctionnement dans lequel les deux charges sont alimentées, le circuit de génération d'impulsions régulant la tension fournie à la deuxième charge, cette tension étant périodiquement fournie à la première charge pendant une durée (T1) relativement courte par rapport à la durée (T2) de fourniture de cette tension à la deuxième charge.

## Description

### Domaine de l'invention

La présente invention concerne le domaine des convertisseurs de puissance et, plus particulièrement, les convertisseurs continu-continu (DC-DC) de type alimentation à découpage. L'invention s'applique notamment à des convertisseurs élévateurs (step-up) destinés à alimenter plusieurs charges de puissances différentes.

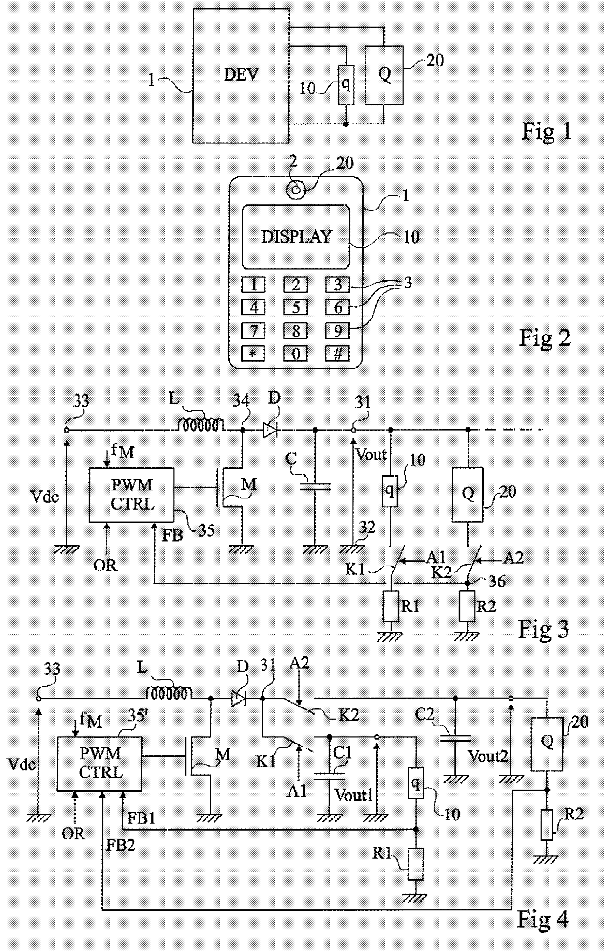

La figure 1 représente, de façon très schématique et sous forme de blocs, un exemple de système du type auquel s'applique la présente invention. Il s'agit d'un dispositif électronique 1 (DEV) comportant ou devant commander au moins deux charges 10 (q) et 20 (Q) présentant des puissances différentes. Ces charges peuvent être de même nature (par exemple, des éléments d'éclairage de type diodes électroluminescentes) ou de nature différente (par exemple, un éclairage et un son).

La figure 2 représente, de façon très schématique, un téléphone portable 1 constituant un exemple d'application de la présente invention. Dans cet exemple, une première charge de puissance relativement faible est constituée par l'écran 10 (DISPLAY) et plus précisément par les diodes électroluminescentes (généralement des diodes blanches) associées en série pour constituer l'élément de rétroéclairement de l'écran. Une charge de puissance relativement forte est constituée, par exemple, d'une diode électroluminescente 20 de type flash (flash LED) destinée à assister la prise de vue par l'intermédiaire d'un objectif 2 que comporte le téléphone mobile. En figure 2, un clavier de touches 3 du téléphone a été illustré.

Un autre exemple d'application concerne les appareils de photo numérique équipés d'un écran de visualisation et de diode de type flash.

### Exposé de l'art antérieur

L'alimentation des charges de puissance relativement forte requiert généralement d'élever la tension d'alimentation du dispositif (généralement une tension fournie par une batterie). Pour des questions d'encombrement, on cherche à alimenter les différentes charges avec un seul convertisseur.

La figure 3 représente un premier exemple classique de convertisseur DC-DC d'alimentation de plusieurs charges indépendantes les unes des autres.

Il s'agit d'un convertisseur élévateur destiné à fournir, entre une borne 31 de sortie et la masse 32, une tension Vout plus élevée qu'une tension continue d'entrée Vdc appliquée entre une borne d'entrée 33 et la masse 32. Les bornes 33 et 31 sont reliées l'une à l'autre par un élément inductif L en série avec une diode D, la cathode de la diode D étant reliée à la borne 31. La tension de sortie est prélevée aux bornes d'un condensateur C reliant la borne 31 à la masse. Un interrupteur M de découpage est connecté entre le point milieu 34 de l'association en série de l'inductance L et de la diode D et la masse. Cet interrupteur M est commandé par un circuit 35 (par exemple, un circuit de commande par modulation de largeur d'impulsions, PWM CTRL) chargé de fournir des impulsions de fermeture de l'interrupteur M en fonction d'une consigne OR et d'un signal FB d'asservissement. Le bloc 35 reçoit également un signal d'horloge f_{M} lui permettant de générer les impulsions de commande de l'interrupteur M. La commande effectuée par le circuit 35 sur les impulsions de commande peut être de type modulation de largeur d'impulsions (PWM), modulation de fréquence (FWM), etc.

Dans l'exemple représenté en figure 3, deux charges 10 (q) et 20 (Q) sont connectées à la borne 31. Chacune des charges est en série avec un interrupteur respectivement K1, K2 commandé par un signal A1, A2 afin de sélectionner la charge 10 ou 20 qui doit être alimentée par la tension Vout. Une résistance R1 ou R2 respectivement, relie l'interrupteur de chacune des charges à la masse 2.

Dans un convertisseur de puissance tel qu'illustré en figure 3, la régulation de la tension Vout ne s'effectue que sur l'une des charges (celle de puissance la plus élevée). Le signal FB est prélevé au point 36 entre la charge 20 et la résistance R2 qui sert de convertisseur courant-tension pour asservir la tension Vout en fonction de la consigne OR. Pour que la régulation s'effectue correctement, les résistances R1 et R2 doivent compenser les différences d'impédances entre les charges 10 et 20 alimentées. De telles résistances de ballast engendrent des pertes, qui notamment dans l'application à des charges de puissance fortement différentes, sont incompatibles avec une recherche de consommation raisonnable.

La figure 4 représente un deuxième exemple classique de régulation de puissance destiné à alimenter plusieurs charges. Dans cet exemple, chaque charge 10 (q), 20 (Q) est alimentée par un condensateur C1, C2 qui lui est propre. La cathode de la diode D est connectée à chacun des condensateurs C1, C2 par l'intermédiaire d'un interrupteur K1 ou K2, respectivement, commandé par un signal A1 ou A2. Les tensions Vout1 et Vout2 d'alimentation des charges 10 et 20 sont respectivement prélevées aux bornes des condensateurs C1 et C2. Le circuit 5' de fourniture du train d'impulsions de commande de l'interrupteur de découpage M reçoit deux signaux d'asservissement FB1 et FB2 prélevés respectivement aux bornes des résistances R1 et R2 reliant chacune des charges 10 et 20 séparément à la masse.

Ce montage permet une régulation indépendante de chacune des tensions d'alimentation des charges. Toutefois, il nécessite deux boucles complètes de régulation des tensions de sortie.

Une autre solution connue (non représentée) consiste à utiliser un multiconvertisseur combinant un convertisseur élévateur avec un système de pompe de charge. Un inconvénient d'une telle solution est son coût et le nombre élevé de composants externes requis.

### Résumé de l'invention

La présente invention vise à proposer un convertisseur de puissance élévateur de tension, de type alimentation à découpage qui pallie tout ou partie des inconvénients des solutions connues.

L'invention vise notamment à permettre l'alimentation, au moyen d'un seul convertisseur élévateur, d'au moins deux charges de puissance différentes l'une de l'autre.

L'invention vise également à permettre le fonctionnement simultané des deux charges.

L'invention vise également à proposer une solution intégrable.

Pour atteindre tout ou partie de ces objets ainsi que d'autres, la présente invention prévoit un convertisseur de puissance de type alimentation à découpage de fourniture d'une tension à plusieurs charges, une première charge étant de puissance relativement faible par rapport à la puissance d'une deuxième charge et le convertisseur comportant un circuit de génération d'impulsions de découpage d'une tension continue d'alimentation, comportant des moyens pour sélectionner un mode de fonctionnement parmi :
un premier mode de fonctionnement dans lequel seule la charge de puissance relativement faible est alimentée et le circuit de génération d'impulsions de découpage régule la tension fournie à cette charge ; et
un deuxième mode de fonctionnement dans lequel les deux charges sont alimentées, le circuit de génération d'impulsions régulant la tension fournie à la deuxième charge, cette tension étant périodiquement fournie à la première charge pendant une première durée relativement courte par rapport à une deuxième durée de fourniture de cette tension à la deuxième charge.

Selon un mode de réalisation de la présente invention, chaque charge est connectée en série avec un interrupteur entre une première borne de fourniture de la tension de sortie et la masse, un condensateur étant connecté en parallèle avec chacune des charges.

Selon un mode de réalisation de la présente invention, une résistance de conversion courant-tension est intercalée entre chaque charge et la masse.

Selon un mode de réalisation de la présente invention, un circuit de commande des interrupteurs affecte à chacune des charges ses périodes d'alimentation pendant le deuxième mode de fonctionnement.

Selon un mode de réalisation de la présente invention, un élément limiteur de courant est en série avec la première charge.

Selon un mode de réalisation de la présente invention, les charges à alimenter sont des diodes électroluminescentes.

Selon un mode de réalisation de la présente invention, la deuxième charge est une diode flash.

L'invention prévoit en outre un procédé de partage d'un convertisseur de puissance entre au moins deux charges de puissances différentes, consistant, pendant des périodes où une alimentation d'une charge de puissance relativement élevée est requise, à affecter à chacune des charges des durées périodiques d'alimentation, les durées d'alimentation de la charge de puissance relativement faible étant faibles par rapport aux durées d'alimentation de la charge de puissance relativement élevée.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment représente, de façon très schématique et sous forme de blocs, un exemple de système auquel s'applique la présente invention ;
la figure 2 qui a été décrite précédemment représente, de façon très schématique, un téléphone mobile équipé d'un appareil photo numérique du type auquel s'applique l'invention selon un mode de réalisation ;
les figures 3 et 4 qui ont été décrites précédemment sont destinées à exposer l'état de la technique et le problème posé ;
la figure 5 représente, de façon partielle et très schématique, un mode de réalisation d'un convertisseur de puissance selon la présente invention ;
les figures 6A et 6B sont des chronogrammes illustrant le fonctionnement du convertisseur de la figure 5 ; et
la figure 7 représente partiellement un détail d'un circuit de commande d'un convertisseur de puissance selon un autre mode de réalisation de la présente invention.

### Description détaillée

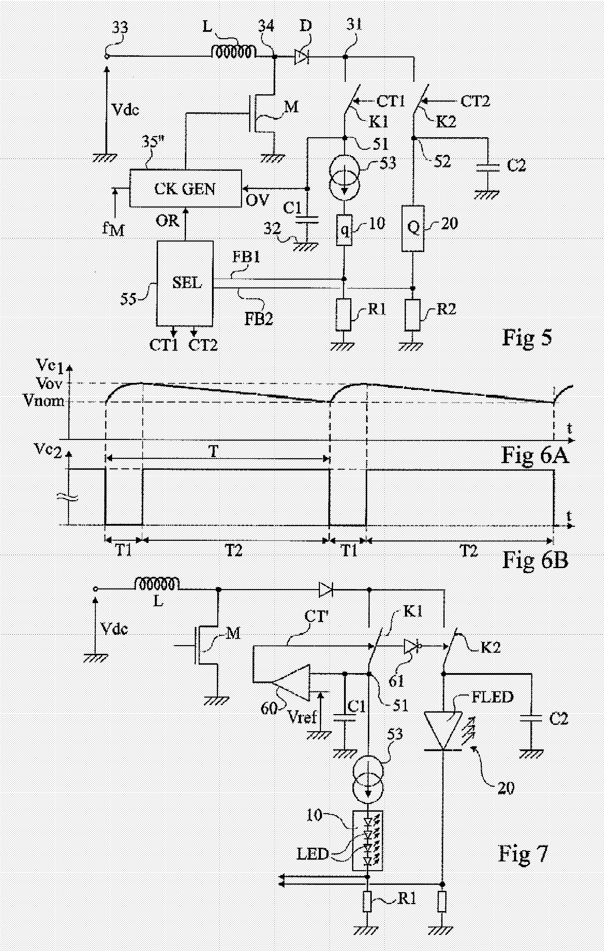

Les mêmes éléments ont été désignés par les mêmes références aux différentes figures et les chronogrammes des figures 6A et 6B ont été tracés sans respect d'échelle. Pour des raisons de clarté, seuls les éléments utiles à la compréhension de l'invention ont été représentés aux figures et seront décrits par la suite. En particulier, le circuit de génération de trains d'impulsions de commande de l'interrupteur de découpage n'a pas été détaillé, l'invention étant compatible avec l'utilisation de tout circuit classique de génération de trains d'impulsions.

La présente invention sera décrite par la suite en relation avec un exemple d'application à un convertisseur élévateur de tension destiné à alimenter à la fois des diodes de rétroéclairement d'un écran et une ou plusieurs diodes de type flash. Toutefois, elle s'applique plus généralement à tout convertisseur élévateur destiné à alimenter deux charges de puissances différentes. Par exemple, il peut s'agir de générer des signaux visuels et sonores, d'une lampe torche équipée d'une fonction flash, etc.

La présente invention tire son origine d'une nouvelle analyse de l'utilisation de charges de puissances différentes dans des applications où, dans la vie du dispositif complet les charges de puissance relativement élevée sont utilisées épisodiquement par rapport aux charges de puissance relativement faible. Par exemple, dans le cas d'un téléphone mobile à fonction photo, l'écran rétroéclairé est utilisé quasiment en permanence (dès que le téléphone n'est plus en mode veille) tandis que le flash est susceptible d'être utilisé de façon épisodique lors d'une prise de vue requérant un éclairage additionnel.

De plus, dans les applications visées par l'invention, l'utilisation des charges de puissance relativement élevée est de durée courte par rapport à l'utilisation des charges de puissance relativement faible. Par exemple, dans le cas d'un téléphone mobile à écran rétroéclairé et à flash, le besoin de commande temporelle du flash est inférieur à 100 µs pour chaque prise de vue. L'intensité requise par le flash est par contre de plusieurs centaines de milliampères (par exemple, de l'ordre de 300 milliampères) qui sont à comparer à la quelque dizaine de milliampères (typiquement, de l'ordre de 20 milliampères) qui suffisent pour alimenter des diodes électroluminescentes en série assurant la fonction de rétroéclairage de l'écran.

La figure 5 représente, de façon très schématique et partielle, un mode de réalisation d'un convertisseur de puissance selon la présente invention.

Le circuit de conversion de puissance proprement dit reprend les mêmes constituants que le circuit classique de la figure 4. Ainsi, un interrupteur de découpage M est connecté au point milieu 34 d'une association en série d'un élément inductif L avec une diode D entre une borne 33 d'application d'une tension continue d'entrée Vdc et une borne 31 susceptible d'être reliée à la masse 32 par un condensateur.

Selon ce mode de réalisation de l'invention, chaque charge 10 (q) ou 20 (Q) est connectée en série avec un interrupteur K1 ou K2 entre la borne 31 et une résistance de conversion courant-tension R1 ou R2 reliée à la masse. De préférence, un élément limiteur de courant 53 est intercalé entre l'interrupteur K1 et la charge 10 de puissance relativement faible.

Un premier condensateur de stockage C1 relie le point 51 d'interconnexion de l'interrupteur K1 avec l'élément 53 à la masse 32. Un deuxième condensateur de stockage C2 relie le point 52 d'interconnexion de l'interrupteur K2 avec la charge 20 à la masse.

Un circuit 35" (CKGEN) de fourniture d'impulsions comporte une entrée de réception d'un signal OR de consigne de la valeur de la tension de sortie souhaitée, une entrée de réception d'un signal OV de détection d'une éventuelle surcharge sur le condensateur C1, et une entrée de réception d'un signal f_{M} d'horloge de fréquence relativement élevée (généralement plusieurs centaines de kilohertz).

Selon ce mode de réalisation de l'invention, le signal OR de consigne est fourni par un circuit 55 de sélection (SEL) d'un mode de fonctionnement parmi deux selon que la charge de puissance relativement forte 20 doit être utilisée ou non. Le circuit 55 reçoit des informations FB1 et FB2 relatives aux courants respectifs dans les charges 10 et 20. Les signaux FB1 et FB2 sont par exemple des tensions prélevées aux bornes des résistances R1 et R2 de conversion courant-tension. Le circuit 55 fournit également les signaux CT1 et CT2 de commande respectifs des interrupteurs CT1 et CT2. En variante, les circuits 35" et 55 sont un seul et même circuit.

Dans un premier mode de fonctionnement, la charge 20 n'est pas utilisée. L'interrupteur K2 est alors ouvert et l'interrupteur K1 est fermé. Le circuit 35" régule la tension aux bornes du condensateur C1 en exploitant, de préférence, l'information FB1 prélevée aux bornes de la résistance R1.

Dans un deuxième mode de fonctionnement où la charge 20 doit être alimentée, le circuit 55 ferme alternativement les interrupteurs K1 et K2 avec une fréquence (par exemple, comprise entre quelques centaines de hertz et quelques dizaines de kilohertz) faible devant la fréquence de plusieurs dizaines voire centaines de kilohertz de commande de l'interrupteur de découpage M. Les périodes de fermeture de l'interrupteur K2 sont grandes par rapport à celles de fermeture de l'interrupteur K1. Pendant ce mode de fonctionnement, le condensateur C1 est chargé périodiquement et sert de réservoir d'alimentation de la charge 10 pendant que l'interrupteur K2 est fermé. La régulation du train d'impulsions de commande de l'interrupteur M est effectuée sur la base du signal FB2 représentatif de la tension aux bornes du condensateur C2.

Les figures 6A et 6B illustrent, par un exemple d'allures des tensions respectives VC1 et VC2 aux bornes des condensateurs C1 et C2, le deuxième mode de fonctionnement d'un convertisseur tel qu'illustré en figure 5.

Pendant une période T grande devant la période des impulsions de commande de l'interrupteur M, l'interrupteur K1 est fermé pendant une durée T1 courte devant la durée T2 de fermeture de l'interrupteur K2. Par exemple, l'interrupteur K1 est fermé à chaque début de période T pendant une durée T1 comprise entre 5 % et 30 % de la période T, l'interrupteur T2 étant fermé le reste (95 % à 70 %) de la période T.

Le condensateur C1 est chargé avec une tension Vov supérieure au niveau de tension requis par la charge 10 (notamment par rapport à la taille suffisante pour le premier mode de fonctionnement) afin d'être capable de fournir une tension Vnom suffisante à un fonctionnement correct de la charge 10 pendant les durées T2 d'activation de la charge 20. Pendant les durées T2, la charge 10 est alimentée par la décharge du condensateur C1.

Pendant le deuxième mode de fonctionnement, le limiteur de courant 53 permet alors de maintenir le courant constant dans la charge et dissipe l'énergie supplémentaire. De telles pertes restent toutefois acceptables dans la mesure où, d'une part, les périodes où ce deuxième mode de fonctionnement est activé sont, dans la vie du produit, rares par rapport aux périodes de fonctionnement normal (premier mode) où seule la charge 10 est utilisée et, d'autre part, le rapport de puissance entre les charges 10 et 20 fait que la quantité d'énergie requise pour alimenter la charge 10 pendant la période T2 reste relativement faible.

De préférence, le niveau de tension de charge du condensateur C1 est mesuré (signal OV) de façon à, si besoin, interrompre les impulsions de fermeture de l'interrupteur M jusqu'à la fin de la durée T1. Cela sert d'une part à protéger la charge 10 contre une éventuelle surtension dommageable et, d'autre part, à limiter les pertes liées à la surtension contrôlée (entre Vnom et Vov) .

En variante, le signal OV est envoyé sur le circuit 55 qui, dans la période T, asservit l'instant de commutation entre les interrupteurs K1 et K2.

La figure 7 représente partiellement et de façon fonctionnelle, un exemple de réalisation d'une partie des circuits 35" et 55 propres au deuxième mode de fonctionnement. Pour simplifier, tous les éléments n'ont pas été repris en figure 7. La charge 10 a été illustrée sous la forme de quatre diodes électroluminescentes LED en série entre l'élément limiteur de courant 53 et la résistance R1. La charge 20 a été illustrée sous la forme d'une diode flash électroluminescente FLED.

Selon le mode de réalisation de la figure 7, les interrupteurs K2 et K1 sont commandés en ouverture par un même signal CT' fourni par un comparateur 60 de la tension aux bornes du condensateur C1 par rapport à une tension de référence Vref. Cette tension de référence est choisie en fonction du niveau Vov (figure 6A) souhaité. Un inverseur 61 est intercalé entre les bornes de commande des interrupteurs K1 et K2 pour réaliser l'inversion de la commande. La représentation de la figure 7 est fonctionnelle. En pratique, on évitera que les deux interrupteurs K1 et K2 aient un risque d'être simultanément passants.

Un avantage de la présente invention est qu'elle permet d'alimenter simultanément les charges de faible puissance et de forte puissance au moyen d'un même convertisseur.

Un autre avantage de la présente invention est que, comme les durées respectives de fourniture de tension aux charges sont supérieures aux durées des impulsions de découpage (fréquence de commande des interrupteurs K1 et K2 faible par rapport à la fréquence de commande de l'interrupteur M), une seule boucle de régulation suffit.

Un autre avantage de la présente invention est qu'elle limite les pertes énergétiques.

Bien entendu, la présente invention est susceptible de diverses variantes et modifications qui apparaîtront à l'homme de l'art. En particulier, bien que l'invention ait été décrite ci-dessus en relation avec une application aux diodes électroluminescentes, elle s'applique plus généralement à la commande de charges variées (par exemple de type alarme sonore ou visuelle) pourvu que les périodes d'utilisation de la ou des charges de puissance relativement élevée soient faibles devant les périodes d'utilisation de la ou des charges de puissance relativement faibles.

De plus, la mise en oeuvre pratique de l'invention à partir des indications fonctionnelles données ci-dessus et en particulier les dimensionnements à donner aux différents constituants sont à la portée de l'homme du métier.

## Revendications

1. Convertisseur de puissance de type alimentation à découpage de fourniture d'une tension à plusieurs charges (10, 20) connectée en série avec un interrupteur (K1, K2) entre une première borne (31) de fourniture de ladite tension et la masse, et en parallèle avec un condensateur (C1, C2), une première charge étant de puissance relativement faible par rapport à la puissance d'une deuxième charge et le convertisseur comportant un circuit de génération d'impulsions de découpage d'une tension continue d'alimentation (Vdc), **caractérisé en ce qu'**il comporte des moyens (55) pour sélectionner un mode de fonctionnement parmi :
un premier mode de fonctionnement dans lequel seule la charge de puissance relativement faible est alimentée et le circuit de génération d'impulsions de découpage régule la tension fournie à cette charge ; et
un deuxième mode de fonctionnement dans lequel les deux charges sont alimentées, le circuit de génération d'impulsions régulant la tension fournie à la deuxième charge, cette tension étant périodiquement fournie à la première charge pendant une première durée (T1) relativement courte par rapport à une deuxième durée (T2) de fourniture de cette tension à la deuxième charge.

2. Convertisseur selon la revendication 1, dans lequel une résistance (R1, R2) de conversion courant-tension est intercalée entre chaque charge et la masse.

3. Convertisseur selon la revendication 1, comportant un circuit (55 ; 60, 61) de commande des interrupteurs (K1, K2) pour affecter à chacune des charges ses périodes d'alimentation pendant le deuxième mode de fonctionnement.

4. Convertisseur selon la revendication 1, dans lequel un élément limiteur de courant (53) est en série avec la première charge.

5. Convertisseur selon l'une quelconque des revendications 1 à 4, dans lequel les charges à alimenter sont des diodes électroluminescentes.

6. Convertisseur selon la revendication 5, dans lequel la deuxième charge est une diode flash.

7. Procédé de partage d'un convertisseur de puissance entre au moins deux charges de puissances différentes, **caractérisé en ce qu'**il consiste, pendant des périodes (T) où une alimentation d'une charge de puissance relativement élevée est requise, à affecter à chacune des charges des durées périodiques d'alimentation, les durées d'alimentation de la charge (10) de puissance relativement faible étant faibles (T1) par rapport aux durées (T2) d'alimentation de la charge (20) de puissance relativement élevée.
